# EUROPEAN PATENT APPLICATION

(11) **EP 0 748 678 A1**
(43) Date of publication of application: **18.12.1996**
(21) Application number: 95201557.6
(22) Date of filing: 12.06.1995
(51) Int. Cl.: B29C 45/27

(54) **Sprue bushing with heater element**

(71) Applicant: EUROTOOL Beheer B.V., NL-3295 KV 's-Gravendeel (NL)
(72) Inventor: Vorköper, Rainer, D-64625 Bensheim (DE); Van den Brink, Anthonie, NL-3273 LC Westmaas (NL)
(74) Representative: de Bruijn, Leendert C.

(57) **Abstract**

An integral electrically heated sprue bushing for injection moulding, comprising:
(a) an alongated inner core portion (2) defining a central runner passage (3) extending there through and an inlet and a possibly restricted orifice portion at opposite ends thereof, the core portion (2) being formed of thermally conductive, preferably metal material, preferably of a high strenght, and having an outer surface;
(b) an electrically insulated heating element (4) running outside said core portion (2), preferably at a distance from said outer surface, said heating element (4) preferably having an elongate shape, such as a wire-type, and having terminal means adapted to receive electrical power from an external source, the heating element (4) is preferably helical and has a plurality of spaced coils encircling said inner core portion (2), and the inner helical diameter of the heating element preferably being greater than the outer diameter of said outer surface of said inner core portion (2); and
(c) said heating element (4) is embedded in thermally conductive and electrically conductive preferably metal material, said embedding material initially having the character of substantially individual granules or powder-particles, which embedded material further has preferably been compressed prior to first use of said sprue bushing, and the embedding material being of such nature that when the embedding material becomes heated, for instance during use of the sprue bushing, the said granules or particles become binded.

## Description

The invention is concerned with a sprue bushing with a heater element, especially adapted for injection moulding.

From US-A-4238671 it is known to have an integral electrically heated sprue bushing for injection moulding, wherein the electrically insulated helical heating element is embedded in an elongated outer shell portion which is casted on the inner core portion. Said outer shell portion is for instance made of a beryllium copper alloy. The drawback of this system is that the material of the outer shell portion must first be molten and then be cast around the inner core portion, which is expensive and rather complex.

From DE-A-2716950 it is known to have the helical heating element, encircling the inner core portion as a plurality of spaced coils, embedded in an electrically insulating embedding material, which initially has the nature of granules or particles, and which embedding material which is then sintered by heating the sprue bushing assembly with the aid of an external heating source, such that the granules or particles will bind to each other and to the heating element. The drawback of this prior art is that the embedding material must be of electrically insulating nature and must posses good sintering properties, while it is further necessary to use an external heating source.

The present invention provides a solution to the above mentioned problems in connection with the prior art sprue bushing systems. Therefore, the present invention suggests a sprue bushing and a method for fabricating a sprue bushing for injection moulding purposes according to the accompanying claims.

It is realized that by using an electrically insulated heating element, electrically conductive, preferably metal, emeedding materials can be used, which, if applied initially as granules or particles can easily be poured around the heating element, without the need for initial heating the embedding material, and then, after the embedding material is provided, a binding between the individual granules or particles of the embedding material can be provided by heating said embedding material with preferably the heating element itself, by connecting said heating element to an external power source, e.g. during the first time, or first times, that the sprue bushing is used in the injection moulding system. In this way, both the assembly of the sprue bushing is less complex, the embedding material does not necessitate special, expensive, materials with good sintering properties, while furthermore an external heating source is not necessary as well, providing for some energy savings.

As embedding material, for instance copper or aluminium or alloys thereof can be used, which have good thermally and electrically conductive properties, while they are inexpensive. The heating can be such that binding of the embedding material will be attained by melting or sintering. Compared to pouring initially molten embedding material around the heating element, melting of the embedding material after pouring the granules or particles around the heating element will decrease the presence of voids to a great extend.

The sprue bushing can both be provided with an outer shell portion, surrounding both the core portion, the heating element and the embedding material, or can be designed without such an outer shell portion. If without such an outer shell portion, it will be appreciated that the sprue bushing must be assembled in a die, and can only be removed from said die after the embedding material has been heated appropriately, such that some binding effect between the granules or particles, is arrived to get enough integrity such that the embedding material has a stable shape. Normally leaving the sprue bush in the die until the embedding material has got enough integrity is no problem, since the proper function of the heating element must be tested beforehand, during which testing the heating effect for binding the granules of particles of the embedding material already takes place. Here arises a further advantage of the present invention: if during initial testing of the sprue bushing it comes out that there are defects present in e.g. the heating element, the embedding material, which has still the nature of individual granules or particles, can easily be removed from the sprue bushing, and can be used again, while e.g. the malfunctioning heating element can be replaced. The same counts for defects concerning e.g. the core portion or the possible outer shell portion.

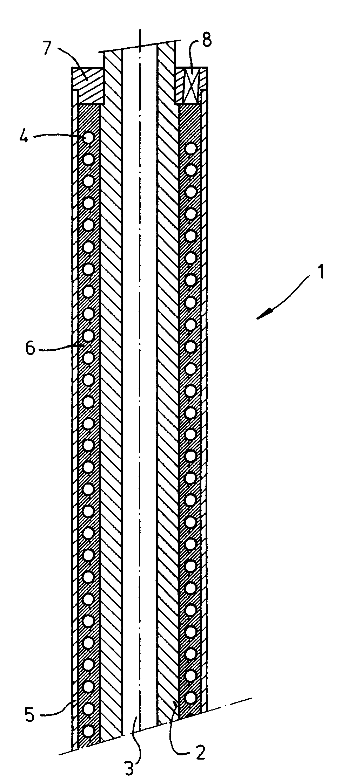

The invention is further explained with the aid of a non-limiting example with reference to the enclosed drawing.

In the single figure, a longitudinal sectional view of a part of a sprue bush according to the invention is shown. This sprue bushing 1 has an elongated inner core portion 2. This inner core portion 2 defines a central runner passage 3 to conduct moulting plastics material for injection moulding purposes. An electrically insulated helical heating element 4, having a plurality of spaced coils, encircles the inner core 2. This heating element 4, comprises resistance wire, coated with an appropriate electrically insulating material, preferably with good sintering properties such as AlSiO₃. This electrically insulating coating is rather thin with respect to the diameter of the heating element, which is typical. An outer shell 5 surrounds both the inner core 2 and the heating element 4, and provides an annular space 6. A space ring 7 is provided to keep the shell 5 at the appropriate distance from the core 2. Of course at the lower part of the sprue bushing 1 (not shown in the drawing), a similar spacer ring 7 can be provided. In the spacer ring 7 there is an orifice 8 or bore, debouching into the space 6. Granules or particles (powder) can be poured through this orifice 8 into the space 6, to fill this space 6 and to embed the heating element 4. After the space 6 is filled with the embedding material, the orifice 8 can be closed, e.g. with a plug. The embedding material can be compressed e.g. by vibrating the assembly of the core 2 and the shell 5. Of course other compression techniques are also applicable. Then, by connecting the heating element to an external electrical power source, the assembly will be heated such that the granules or particles of the embedding material within the space 6 will bind together.

## Claims

1. An integral electrically heated sprue bushing for injection moulding, comprising:
(a) an elongated inner core portion defining a central runner passage extending there through and an inlet and a possibly restricted orifice portion at opposite ends thereof, the core portion being formed of thermally conductive, preferably metal material, preferably of a high strength, and having an outer surface;
(b) an electrically insulated heating element running outside said core portion, preferably at a distance from said outer surface, said heating element preferably having an elongate shape, such as a wire-type, and having terminal means adapted to receive electrical power from an external source, the heating element is preferably helical and has a plurality of spaced coils encircling said inner core portion, and the inner helical diameter of the heating element preferably being greater than the outer diameter of said outer surface of said inner core portion; and
(c) said heating element is embedded in thermally conductive and electrically conductive preferably metal material, said embedding material initially having the character of substantially individual granules or power-particles, which embedding material further has preferably been compressed prior to first use of said sprue bushing, and the embedding material being of such nature that when the embedding material becomes heated, for instance during use of the sprue bushing, the said granules or particles become binded.

2. A sprue bushing as claimed in claim 1, wherein said embedding material is copper or aluminium, or alloys thereof.

3. A sprue bushing as claimed in claim 1 or claim 2, wherein an outer shell portion encircles said core portion and said heating element to delimit a gap surrounding said core portion, receiving said embedding material.

4. Method for fabricating an integral electrically heated sprue bushing for injection moulding, comprising the following steps:
(a) positioning an elongated inner core portion, defining a central runner passage extending there through and having an inlet and an orifice portion at opposite ends thereof, and an elongated outer shell portion, surrounding said inner core portion, such that an annular space is delimited between said inner core portion and said outer shell portion;
(b) providing an electrically insulated helical heating element in said annular space to at least partially surround said inner core portion, said heating element having terminal means adapted to receive electrical power from an external source;
(c) filling said annular space with an embedding material for embedding said heating element, which embedding material has the nature of granules or particles, which are preferable poured into said annular space;
(d) optionally compressing said embedding material filling said annular space; and
(e) heating said electrically conductive and thermally conductive preferably metal embedding material preferably by connecting said terminal means of said heating element to an external power source, such that said granules or particles of said embedding material will bind to each other.

5. Method according to claim 4, wherein said compressing step is carried out by vibrating said sprue bushing.
